# EUROPÄISCHE PATENTSCHRIFT

(11) **EP 0 689 788 B1**
(45) Veröffentlichungstag und Bekanntmachung des Hinweises auf die Patenterteilung: **06.08.1997**
(21) Anmeldenummer: 95109178.4
(22) Anmeldetag: 14.06.1995
(51) Int. Cl.: A47J 31/44, A47G 19/14, A47J 31/50

(54) **Deckel für eine Brühgetränkekanne**
Lid for a brewing vessel
Couvercle pour un récipient à infusions

(30) Priorität: 01.07.1994 DE 4423110
(43) Veröffentlichungstag der Anmeldung: 03.01.1996
(73) Patentinhaber: Braun Aktiengesellschaft, Frankfurt am Main (DE)
(72) Erfinder: Link, Karl, D-61352 Bad Homburg (DE); Oppermann, Günther, D-63128 Dietzenbach (DE); Wagner, Utz, D-60316 Frankfurt am Main (DE)

(56) Entgegenhaltungen:
- EP-A- 0 406 125
- DE-U- 9 016 307
- US-A- 4 638 929

## Beschreibung

Die Erfindung betrifft einen Deckel für eine Brühgetränkekanne mit einer Ausgießstelle, wobei der Deckel eine Ausschneidung zum Ausgießen und eine das Getränk passierende Einlauföffnung aufweist, an die sich ein Einlaufkanal anschließt, der den Deckel durchdringt und an einer Auslauföffnung endet und der mit einem Dampfabweiser versehen ist.

Derartige Deckel gehören beispielsweise zu Kaffee- oder Teekannen für Kaffee- oder Teemaschinen. Eine Kaffeekanne wird beispielsweise mit aufgesetztem Deckel unter ein Kaffeefilter der Kaffeemaschine gestellt, so daß aus dem Kaffeefilter auslaufender Kaffee durch die Einlauföffnung des Deckels in die Kaffeekanne fließt.

Aus der DE-U 90 16 307 ist ein Deckel für eine Kaffeemaschine bekannt, bei der die Einlauföffnung durch ein Ventil verschließbar ist, wenn kein Kaffee in die Kanne einfließt. Dies hat den Vorteil, daß kein Dampf aus der Kaffeekanne austreten kann. Dies vermeidet zum einen einen Wärmeverlust, der Kaffee kühlt langsamer ab oder er muß mit weniger Heizleistung warmgehalten werden. Zum anderen wird der in der Kaffeekanne verbleibende Kaffee durch die Vermeidung des Dampfaustritts weniger konzentriert und weniger stark, sein Geschmack wird dadurch positiv beeinflußt.

Aufgabe der Erfindung ist es, die Einlauföffnung eines Deckels der eingangs genannten Art so auszubilden, daß durch sie einerseits ein Dampfaustritt aus einer Brühgetränkekanne, auf die der Deckel aufgesetzt ist, ohne Ausbildung eines Ventils weitgehend unterbunden wird und daß durch sie andererseits beim Ausgießen von Flüssigkeit aus der Brühgetränkekanne ein Auslaufen an der Einlaßöffnung vermieden wird.

Diese Aufgabe wird durch die Merkmale des Anspruchs 1 gelöst.

Der Dampfabweiser des erfindungsgemäßen Deckels ist mit Abstand unterhalb von dessen Einlauföffnung quer verlaufend angeordnet, so daß Flüssigkeit von oben durch die Einlauföffnung auf den Dampfabweiser und weiter seitlich über diesen in die Brühgetränkekanne fließen kann. Dabei deckt der Dampfabweiser die Einlauföffnung ab, so daß Dampf aus der Brühgetränkekanne nicht direkt nach oben durch die Einlauföffnung des Deckels austreten kann. Aufsteigender Dampf wird vom Dampfabweiser von der Einlauföffnung weg zur Seite abgelenkt, von wo er zur Unterseite des Deckels aufsteigt, dort kondensiert und wieder in die Kanne herabtropft. Die Menge des am Dampfabweiser vorbei durch die Einlauföffnung austretenden Dampfes ist vernachlässigbar gering. Dabei ist ein weiterer Vorteil der Erfindung, daß zum Verschließen der Einlauföffnung des Deckels gegen Dampfaustritt keine beweglichen Teile notwendig sind.

Mittels der Erfindung werden der Dampfaustritt und die Oxidation durch Lufteintritt stark reduziert, wodurch in der Brühgetränkekanne enthaltenes Getränk lange Zeit schmackhaft bleibt. Der geringe Dampfverlust führt überdies zu einem geringen Wärmeverlust, was insbesondere für Isolierkannen von Vorteil ist.

Der Dampfabweiser kann quer oder geneigt unterhalb der Einlauföffnung angeordnet sein. Er kann auch Dampfleitfunktion ausüben, d. h. aufsteigenden Dampf in einer Richtung seitlich oder nach allen Seiten von der Einlauföffnung wegleiten. Er kann dazu beispielsweise mit einer nach unten weisenden Spitze oder Rundung ausgebildet sein, von der sich eine Umfangsfläche nach oben außen wölbt.

Nach der Erfindung schließt sich an die Einlauföffnung des Deckels ein Einlaufkanal an, der von der Einlauföffnung seitlich wegführt. Der untere Bereich einer Kanalwand bildet dabei den Dampfabweiser, der einen direkten Dampfaustritt aus der Einlauföffnung verhindert. Flüssigkeit, die in die Einlauföffnung fließt, wird durch den Einlaufkanal zur Seite umgelenkt und strömt aus diesem seitlich versetzt zur Einlauföffnung in die Brühgetränkekanne hinab.

Der Einlaufkanal, der von einer Ausgießstelle der Brühgetränkekanne, dies kann eine Ausgießöffnung oder eine Ausgießzotte sein, wegführt, bringt den zusätzlichen Vorteil eines Überlaufschutzes mit sich: Er verhindert ein Auslaufen von Flüssigkeit aus der Brühgetränkekanne durch die Einlauföffnung des Deckels, wenn die Brühgetränkekanne zum Ausschenken geneigt wird. Ein solches unbeabsichtigtes Ausströmen von Flüssigkeit durch die Einlauföffnung führt normalerweise dazu, daß die Flüssigkeit nicht, wie beabsichtigt, in ein Trinkgefäß gelangt, sondern daneben fließt. Auch verhindert der Einlaufkanal, daß Flüssigkeitsspritzer aus der Brühgetränkekanne durch die Einlauföffnung austreten, wenn die Brühgetränkekanne beim Hantieren heftig bewegt wird und dabei Flüssigkeit von innen gegen den Deckel spritzt. Dabei befindet sich die kanneninnere Mündung des Einlaufkanals an der Seite des Deckels, die beim Neigen der Brühgetränkekanne zum Ausschenken eines Getränks nach oben schwenkt. Es kann dadurch beim Ausschenken keine Flüssigkeit in den Einlaufkanal fließen, ein unerwünschter Flüssigkeitsaustritt aus der Einlauföffnung beim Ausschenken eines Getränks wird vermieden.

Vorzugsweise verläuft der Einlaufkanal etwas nach unten geneigt, damit in ihm befindliche Flüssigkeit durch die Wirkung der Schwerkraft zu seinem in das Kanneninnere mündende Ende fließt.

Damit der am Deckel befindliche Einlaufkanal bei auf die Brühgetränkekanne aufgesetztem Deckel von der Ausgießstelle der Brühgetränkekanne wegführt, muß die Winkelzuordnung zwischen Deckel und Brühgetränkekanne eindeutig festliegen. Dies läßt sich bei einfachen Ausgestaltungen dadurch erreichen, daß der Deckel eine Ausschneidung zum Ausgießen aufweist. Der Deckel wird so auf die Brühgetränkekanne aufgesetzt, daß diese Ausschneidung sich an der Ausgießzotte der Brühgetränkekanne befindet. Der Deckel kann auch einen seitlich abstehenden Griff aufweisen, der beim Aufsetzen des Deckels in Übereinstimmung mit einem Handgriff der Brühgetränkekanne zu bringen ist. Vorteilhaft ist es allerdings, den Deckel formschlüssig auf die Brühgetränkekanne aufzusetzen, wobei der Formschluß das Aufsetzen nur in der festgelegten Winkelstellung des Deckels in Bezug auf die Brühgetränkekanne zuläßt. Die richtige Stellung des Einlaufkanals in Bezug auf die Ausgießstelle der Brühgetränkekanne ist dadurch sichergestellt.

Vorzugsweise befindet sich die kanneninnere Mündung des Einlaufkanals im Seitenbereich des Deckels, also an der höchsten Stelle, wenn die Brühgetränkekanne zum Ausschenken geneigt wird.

Der Dampfabweiser bzw. der Einlaufkanal wird bevorzugt mit dem Deckel, oder, bei einem mehrteiligen Deckel beispielsweise für eine Isolierkanne, einstückig mit einem Deckelunterteil gefertigt. Der zusätzlich erforderliche Fertigungsaufwand für den Dampfabweiser oder den Einlaufkanal wird dadurch gering gehalten, der Dampfabweiser bzw. der Einlaufkanal wird in einem Arbeitsgang zusammen mit dem Deckel oder mit dessen Unterteil hergestellt.

Nach den Merkmalen des Anspruchs 5 wird ein Auslaufen von Flüssigkeit beim Ausgießvorgang über die Einlauföffnung besonders wirkungsvoll vermieden, da die Auslauföffnung beim Schrägstellen der Kanne immer den weitestmöglichen Abstand zu dem sich einstellenden Flüssigkeitspegel hat.

Die Erfindung wird nachfolgend anhand des in der Zeichnung dargestellten Ausführungsbeispiels näher erläutert. Es zeigen:
- Fig. 1: einen erfindungsgemäßen Deckel im Querschnitt; und
- Fig. 2: eine Isolierkanne von oben.

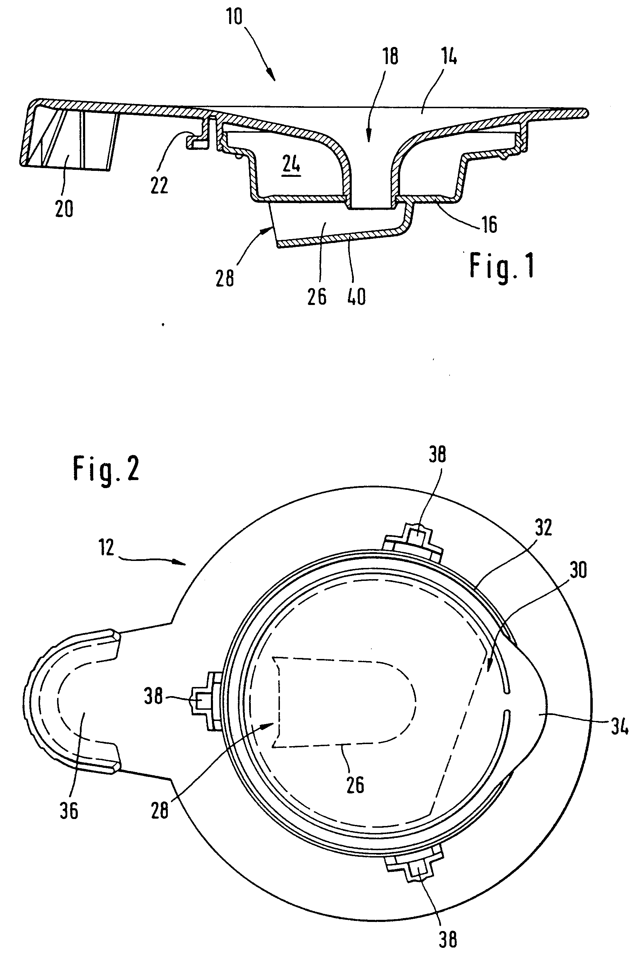

Der in Figur 1 dargestellte, insgesamt mit 10 bezeichnete Deckel ist zum Aufsetzen auf eine Isolierkanne 12, wie sie in Figur 2 dargestellt ist, vorgesehen. Der Deckel 10 ist zweiteilig, er besteht aus einem Oberteil 14 und einem Unterteil 16.

Das Deckel-Oberteil 14 ist trichterförmig ausgebildet, wobei die Trichterform in eine durch den Deckel 10 in der Mitte hindurchgehende Einlauföffnung 18 übergeht. Ein Griffelement 20 steht an einer Umfangsstelle in radialer Richtung vom Oberteil 14 ab. An seiner Unterseite weist das Deckel-Oberteil 14 drei Verriegelungsklauen 22 auf, von denen in Figur 1 nur eine sichtbar ist. Diese Verriegelungsklauen 22 dienen zum lösbaren Verbinden des Deckels 10 mit der Isolierkanne 12. Sie sind ungleichmäßig über den Umfang des Deckels 10 verteilt.

Das Deckel-Unterteil 16 ist fest mit dem Deckel-Oberteil 14 verbunden, es schließt zwecks guter thermischer Isolierung einen Hohlraum 24 mit dem Oberteil 14 ein, der mit Isoliermaterial gefüllt sein kann. Am Unterteil 16 ist ein Einlaufkanal 26 ausgebildet, in den die Einlauföffnung 18 mündet. Der Einlaufkanal 26 verläuft seitlich in Richtung des Griffelements 20. Er mündet im Seitenbereich des Deckels 10, seine Mündung 28 befindet sich bei auf die Isolierkanne 12 aufgesetzem Deckel 10 im Innern der Isolierkanne 12.

Eine untere Kanalwand 40 des Einlaufkanals 26 bildet einen Dampfabweiser, der in der Isolierkanne 12 aufsteigenden Dampf von der Einlauföffnung 18 abweist und Dampfaustritt aus der Isolierkanne 12 durch die Einlauföffnung 18 nahezu vollständig unterbindet. Des weiteren verhindert die untere Kanalwand 40 das Herausspritzen von Flüssigkeit aus der Isolierkanne 12 durch die Einlauföffnung 18, wenn die Isolierkanne 12 ruckartig bewegt wird.

Die in Figur 2 dargestellte Isolierkanne 12 weist eine Einfüll- und Ausgießöffnung 30 an ihrer Oberseite auf, deren umlaufender Rand 32 an einer Stelle seines Umfangs zu einer Ausgießzotte 34 geformt ist.

Der Ausgießzotte 34 gegenüberliegend weist die Isolierkanne 12 einen Handgriff 36 auf.

Um den Rand 32 der Einfüll- und Ausgießöffnung 30 herum sind drei Einführungen 38 für die Verriegelungsklauen 22 des Deckels 10 angeordnet. Diese Einführungen 38 sind übereinstimmend mit den Verriegelungsklauen 22 ungleichmäßig über den Umfang verteilt an der Isolierkanne 12 angeordnet. Beim Aufsetzen des Deckels 10 auf die Isolierkanne 12 gelangen die Verriegelungsklauen 22 in die Einführungen 38. Durch Verdrehen des Deckel 10 um einen kleinen Winkel in Bezug auf die Isolierkanne 12 gelangen die Verriegelungsklauen 22 in Eingriff mit in der Zeichnung nicht sichtbaren, in Umfangsrichtung verlaufenden Hinterschneidungen der Einführungen 38, so daß der Deckel 10 mit der Isolierkanne 12 verbunden ist.

Durch die ungleichmäßige Anordnung der Verriegelungsklauen 22 und der Einführungen 38 ist die Winkelstellung des Deckels 10 in Bezug auf die Isolierkanne 12 festgelegt: Das Griffelement 20 des Deckels 10 befindet sich über dem Handgriff 36 der Isolierkanne 12. Der Einlaufkanal 26, der in Figur 2 zusammen mit einer Umfangswand des Deckels 10 mit Strichlinien angedeutet ist, verläuft von der Mitte des Deckels 10 auf den Handgriff 36 der Isolierkanne 12 zu und von deren Ausgießzotte 34 weg. Die Auslauföffnung 28 des Einlaufkanals 26 befindet sich dadurch an einer Stelle, die, wenn die Isolierkanne 12 zum Ausschenken eines Getränks in Richtung auf die Ausgießzotte 34 geneigt wird, nach oben schwenkt. Dadurch wird verhindert, daß selbst bei relativ starker Neigung der vollen Isolierkanne 12 Flüssigkeit in den Einlaufkanal 26 gelangt und durch die Einlauföffnung 18 austreten kann.

Die Isolierkanne 12 ist mit aufgesetztem Deckel 10 zum Einstellen in eine nicht dargestellte Kaffeemaschine unter deren Kaffeefilter vorgesehen. Aus dem Kaffeefilter auslaufender Kaffee wird durch das trichterförmig ausgebildete Deckel-Oberteil 14 der Einlauföffnung 18 zugeleitet und fließt von dort durch den Einlaufkanal 26 in die Isolierkanne 12.

## Patentansprüche

1. Deckel (10) für eine Brühgetränkekanne (12) mit einer Ausgießstelle (34), wobei der Deckel (10) eine Ausschneidung zum Ausgießen und eine das Getränk passierende Einlauföffnung (18) aufweist, an die sich ein Einlaufkanal (26) anschließt, der den Deckel (10) durchdringt und an einer Auslauföffnung (28) endet und der mit einem Dampfabweiser (40) versehen ist, so daß Dampf aus der Brühgetränkekanne nicht direkt nach oben durch die Einlauföffnung (18) austreten kann,
**dadurch gekennzeichnet**,
daß zumindest ein Teil des Einlaufkanals (26) einerseits von der Einlauföffnung (18) weg im wesentlichen seitlich verläuft und andererseits von der Ausschneidung wegführt.

2. Deckel nach Anspruch 1,
**dadurch gekennzeichnet**,
daß der Einlaufkanal (26) von der Einlauföffnung (18) weg etwas nach unten geneigt verläuft.

3. Deckel nach Anspruch 1 oder 2,
**dadurch gekennzeichnet**,
daß sich die Auslauföffnung (28) des Einlaufkanals (26) im Seitenbereich des Deckels (10) befindet.

4. Deckel nach Anspruch 1 oder 2,
**dadurch gekennzeichnet**,
daß der Dampfabweiser (40) bzw. der Einlaufkanal (26) einstückig mit dem Deckel (10) oder mit einem Deckel-Unterteil (16) eines zwei- oder mehrteiligen Deckels (10) ist.

5. Deckel nach Anspruch 1,
**dadurch gekennzeichnet**,
daß die der Einlauföffnung (18) gegenüberliegende Auslauföffnung (28) des Einlaufkanals (26) der Ausgießstelle (34) abgewandt ist.

## Claims

1. A a lid (10) for a carafe (12) for holding a brewed beverage, with a pouring means (34), said lid (10) having a cutout for pouring and an inlet opening (18) for passage of the beverage, said inlet opening continuing in an inlet channel (26) which extends through the lid (10) and terminates at a mouth (28) and is provided with a steam deflector (40) preventing the discharge of steam from the carafe directly upwards through the inlet opening (18),
**characterized in that** at least part of the inlet channel (26) extends essentially laterally away from the inlet opening (18) on the one hand and leads away from the cutout on the other hand.

2. The lid as claimed in claim 1,
**characterized in that** the inlet channel (26) extends away from the inlet opening (18) at a slight downward inclination.

3. The lid as claimed in claim 1 or claim 2,
**characterized in that** the mouth (28) of the inlet channel (26) is located in the side area of the lid (10).

4. The lid as claimed in claim 1 or claim 2,
**characterized in that** the steam deflector (40) or the inlet channel (26) is made integrally with the lid (10) or with a lid bottom part (16) of a lid (10) comprised of two or more parts.

5. The lid as claimed in claim 1,
**characterized in that** the mouth (28) of the inlet channel (26) opposite the inlet opening (18) faces away from the pouring means (34).

## Revendications

1. Couvercle (10) pour un pot à infusion (12) présentant une zone versese (34), dans lequel le couvercle (10) présente une découpure verseuse et une ouverture d'entrée (18) qui donne passage à la boisson, et à laquelle se raccorde un canal d'entrée (26) qui traverse le couvercle (10) et se termine par une ouverture de sortie (28), ce couvercle étant muni d'un déflecteur de vapeur (40), de sorte que la vapeur dégagée de l'infusion ne peut pas sortir directement à travers l'ouverture d'entrée (18),
caractérisé
en ce que, d'une part, au moins une partie du canal d'entrée (26) s'étend essentiellement latéralement en s'éloignant de l'ouverture d'entrée (18) et, d'autre part, elle s'étend dans le sens qui s'éloigne de la découpure.

2. Couvercle selon la revendication 1,
caractérisé
en ce que le canal d'entrée (26) s'étend dans une direction légèrement inclinée vers le bas en s'éloignant de l'ouverture d'entrée (18).

3. Couvercle selon la revendication 1 ou 2,
caractérisé
en ce que l'ouverture de sortie (28) du canal d'entrée (26) se trouve dans la région latérale du couvercle (10).

4. Couvercle selon la revendication 1 ou 2,
caractérisé
en ce que le déflecteur de vapeur (40) ou le canal d'entrée (26) est d'une seule pièce avec le couvercle (10) ou d'une seule pièce avec une partie inférieure (16) d'un couvercle (10) en deux ou plus de deux parties.

5. Couvercle selon la revendication 1,
caractérisé
en ce que l'ouverture de sortie (28) du canal d'entrée (26) qui est à l'opposé de l'ouverture d'entrée (18) est dirigée dans le sens qui s'éloigne de la zone verseuse (34).
